# EUROPEAN PATENT APPLICATION

(11) **EP 4 806 686 A1**
(43) Date of publication of application: **16.09.2026**
(21) Application number: 23956997.3
(22) Date of filing: 06.11.2023
(51) Int. Cl.: B60K 5/12, F02B 77/13

(54) **INTERNAL COMBUSTION ENGINE**

(71) Applicant: Nissan Motor Co. Ltd, Yokohama-shi, Kanagawa 220-8623 (JP)
(72) Inventor: YABE, Tadashi, Atsugi-shi, Kanagawa 243-0123 (JP)
(74) Representative: Hoefer & Partner Patentanwälte mbB
(86) International application number: PCT/JP2023/039798
(87) International publication number: WO 2025/099786

(57) **Abstract**

An internal combustion engine (1) includes a resin front cover (5) covering an end surface, located at one end side in a cylinder line direction, of an internal combustion engine body (8) having a cylinder head (2) and a cylinder block (3), and a metal internal combustion engine-side mounting bracket (6) located at the one end side in the cylinder line direction of the internal combustion engine body (8), disposed so as to straddle an outside of the front cover (5), and connecting the internal combustion engine body (8) to a vehicle body. Both side portions (6a, 6b), in a width direction of the internal combustion engine body (8), of the internal combustion engine-side mounting bracket (6) are each fixed to both of the cylinder head (2) and the cylinder block (3).

## Description

### TECHNICAL FIELD

[0001. The present invention relates to an internal combustion engine mounted on a vehicle.

### BACKGROUND ART

[0002. One end side, in a cylinder line direction, of the internal combustion engine is covered with a chain case (a front cover) so as to cover a timing chain that transmits a rotational force of a crankshaft to a camshaft.

[0003. For instance, Patent Document 1 discloses a support bracket-integrated metal chain case in which a chain cover portion and a support bracket portion for fixing an engine mount, which is a component for suspending the engine on a vehicle body, are integrally formed. The chain case in Patent Document 1 is made of metal, and contributes to ensuring the rigidity of a front end of the internal combustion engine.

[0004. However, since the chain case in Patent Document 1 is made of metal, there is a problem of increasing the weight of the internal combustion engine.

[0005. That is, there is room for further improvement in weight reduction while ensuring the rigidity of the front end of the internal combustion engine in the internal combustion engine having the chain case.

### CITATION LIST

### PATENT DOCUMENT

[0006. Patent Document 1: Japanese Unexamined Patent Application Publication No. JP2013-76350

### SUMMARY OF THE INVENTION

[0007. An internal combustion engine of the present invention comprises: a resin front cover covering an end surface, located at one end side in a cylinder line direction, of an internal combustion engine body having a cylinder head and a cylinder block; and a metal mounting bracket located at the one end side in the cylinder line direction of the internal combustion engine body, disposed so as to straddle an outside of the front cover, and connecting the internal combustion engine body to a vehicle body. Both side portions, in a width direction of the internal combustion engine body, of the mounting bracket are each fixed to both of the cylinder head and the cylinder block.

[0008. In the internal combustion engine, since both side portions of the mounting bracket are each fixed to both of the cylinder head and the cylinder block at different securing points, it is possible to ensure the rigidity of the one end side in the cylinder line direction of the internal combustion engine body.

### RIEF DESCRIPTION OF THE DRAWINGS

[0009.
Fig. 1 is an explanatory drawing schematically showing a configuration of an internal combustion engine to which the present invention is applied.
Fig. 2 is an explanatory drawing schematically showing one end side, in a cylinder line direction, of the internal combustion engine to which the present invention is applied, when viewed from above.
Fig. 3 is a front view of a front cover.
Fig. 4 is a front view of the internal combustion engine to which an internal combustion engine-side mounting bracket is attached.
Fig. 5 is an exploded perspective view of the front cover and the internal combustion engine-side mounting bracket.
Fig. 6 is an explanatory drawing schematically showing another embodiment of the present invention.

### EMBODIMENTS FOR CARRYING OUT THE INVENTION

[0010. Embodiments of the present invention will be described in detail below with reference to the drawings. In the drawings, an X-axis indicates an axis along a front-rear direction of an internal combustion engine 1 (an axis parallel to a center axis of a crankshaft 19 of the internal combustion engine 1), a Y-axis indicates an axis along a right-left direction of the internal combustion engine 1 (an axis along a width direction of the internal combustion engine 1), and a Z-axis indicates an axis along an up-down direction (a vertical direction) of the internal combustion engine 1 (an axis parallel to a cylinder axis L1 of the internal combustion engine 1). That is, the X-axis is an axis along a cylinder line direction of the internal combustion engine 1 or an internal combustion engine body 8 (described later). The Y-axis is an axis along a width direction of the internal combustion engine body 8.

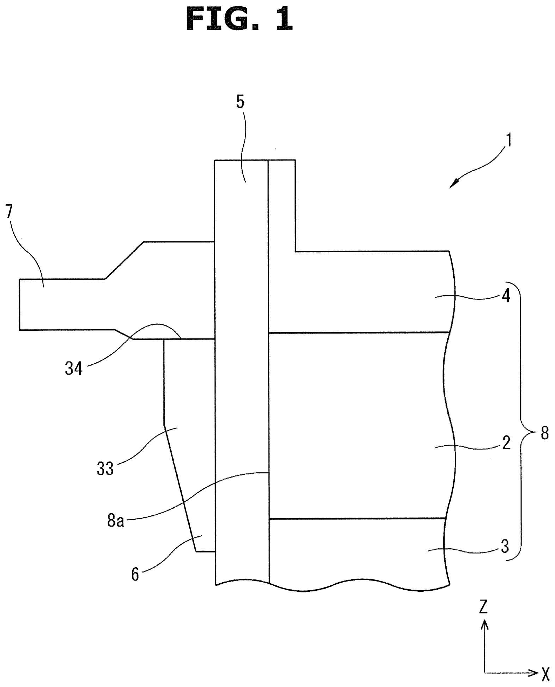

[0011. Fig. 1 is an explanatory drawing schematically showing a configuration of an internal combustion engine 1 to which the present invention is applied.

[0012. The internal combustion engine 1 is, for instance, an in-line multi-cylinder internal combustion engine. The internal combustion engine 1 includes a cylinder head 2, a cylinder block 3 fixed to a lower portion of the cylinder head 2, a cam bracket 4 fixed to an upper portion of the cylinder head 2, a front cover 5 covering a front surface of the internal combustion engine body 8, and an internal combustion engine-side mounting bracket 6 as a metal mounting bracket arranged above a front surface of the front cover 5. In Fig. 1, a reference sign 7 is a vehicle body-side mounting bracket fixed to a vehicle body side. The cylinder head 2, the cylinder block 3 and the cam bracket 4 constitute the internal combustion engine body 8. Therefore, the front cover 5 covers an end surface, located at one end side in the cylinder line direction, of the internal combustion engine body 8.

[0013. The cylinder head 2 is a casting made of a metal material such as aluminum alloy. An intake port (not shown) for supplying intake air into a combustion chamber (not shown) and an exhaust port (not shown) for exhausting exhaust gas from the combustion chamber (not shown) are formed at the cylinder head 2.

[0014. The cylinder block 3 is a casting made of a metal material such as aluminum alloy, and has cylinders (not shown) whose number corresponds to the number of the cylinders.

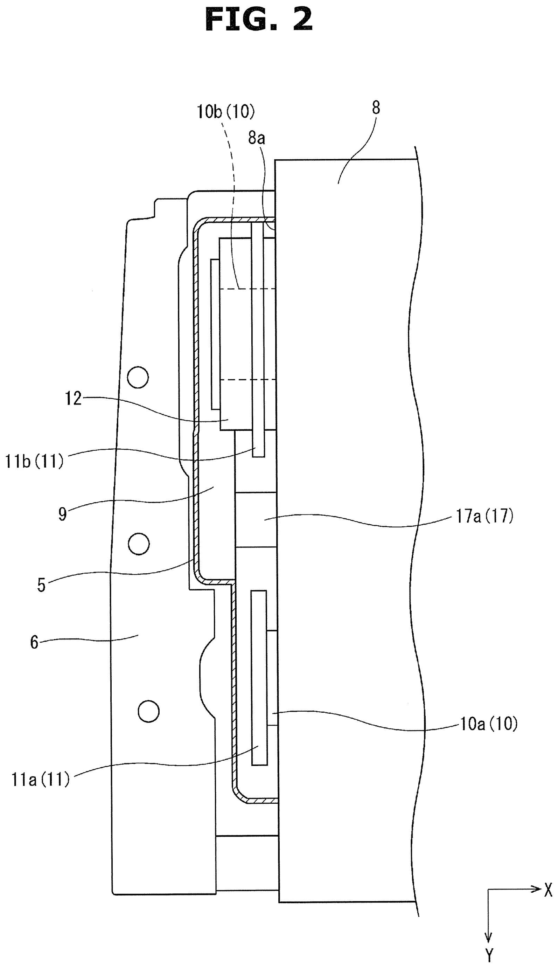

[0015. The cam bracket 4 is made of a metal material such as aluminum alloy. The cam bracket 4 rotatably supports a camshaft 10 (see Fig. 2) together with the cylinder head 2.

[0016. The front cover 5 is made of a synthetic resin material such as polyamide. The front cover 5 is liquid-tightly attached to the internal combustion engine body 8 so as to cover the front surface of the internal combustion engine body 8. More specifically, the front cover 5 is secured to a front surface of the cylinder block 3, a front surface of the cylinder head 2, a front surface of the cam bracket 4 etc. with bolts (not shown). In other words, the front cover 5 is attached to the internal combustion engine body 8 so as to cover end surfaces, located at one end sides in the crankshaft axial direction, of the cylinder block 3 and the cylinder head 2, i.e. so as to cover the end surface, located at one end side in the cylinder line direction, of the internal combustion engine body 8.

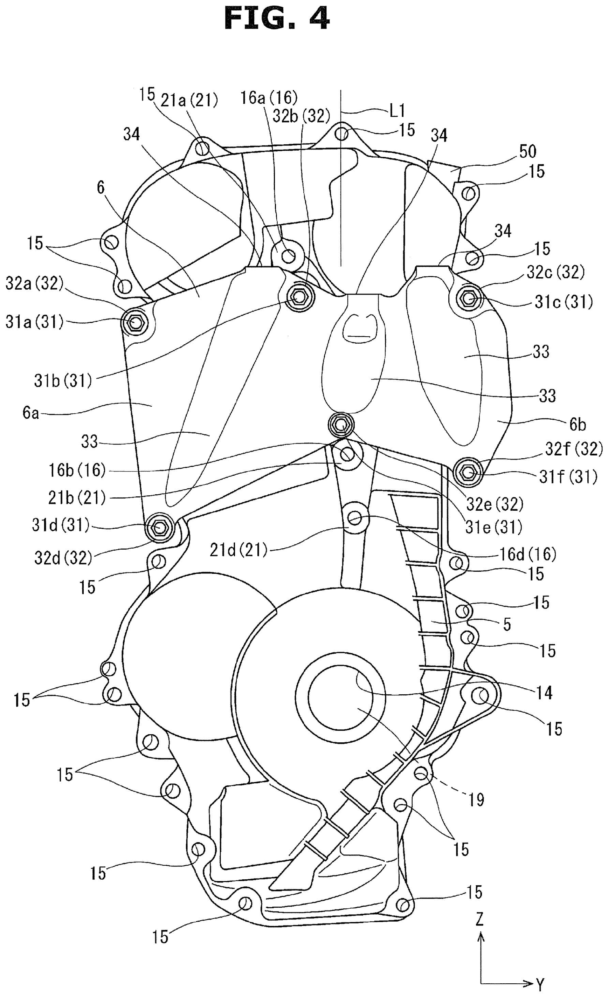

[0017. As illustrated in Fig. 2, the front cover 5 has a shallow dish shape, and a space 9 is formed between the front cover 5 and the front surface of the internal combustion engine body 8 which is the end surface, located at one end side in the cylinder line direction, of the internal combustion engine body 8. A rotational power transmission mechanism is then accommodated in the space 9. Fig. 2 is an explanatory drawing schematically showing one end side, in the cylinder line direction, of the internal combustion engine 1, when viewed from above. A crank sprocket (not shown) fixed to the crankshaft 19 (see Fig. 4), and a cam sprocket 11 fixed to a front end of the camshaft 10 are accommodated in the space 9. A timing chain (not shown) for transmitting rotational power is would around these crank sprocket and cam sprocket 11. The space 9 formed between the front cover 5 and the internal combustion engine body 8 is an environment having a timing chain that performs oil lubrication. The space 9 is liquid-tight from the outside by liquid-tightly sealing a gap between the front cover 5 and the internal combustion engine body 8.

[0018. An intake cam sprocket 11a is attached to a front end of an intake camshaft 10a. An exhaust cam sprocket 11b and a variable phase mechanism 12 are attached to a front end of an exhaust camshaft 10b. The variable phase mechanism 12 is a variable valve mechanism that changes a valve timing of an exhaust valve as an engine valve by changing a phase of a lift center angle of the exhaust valve.

[0019. The variable phase mechanism 12 is covered with the front cover 5 on an upper side with respect to the internal combustion engine-side mounting bracket 6 in an up-down direction along the cylinder axis L1 (see Fig. 4 described later) of the internal combustion engine 1.

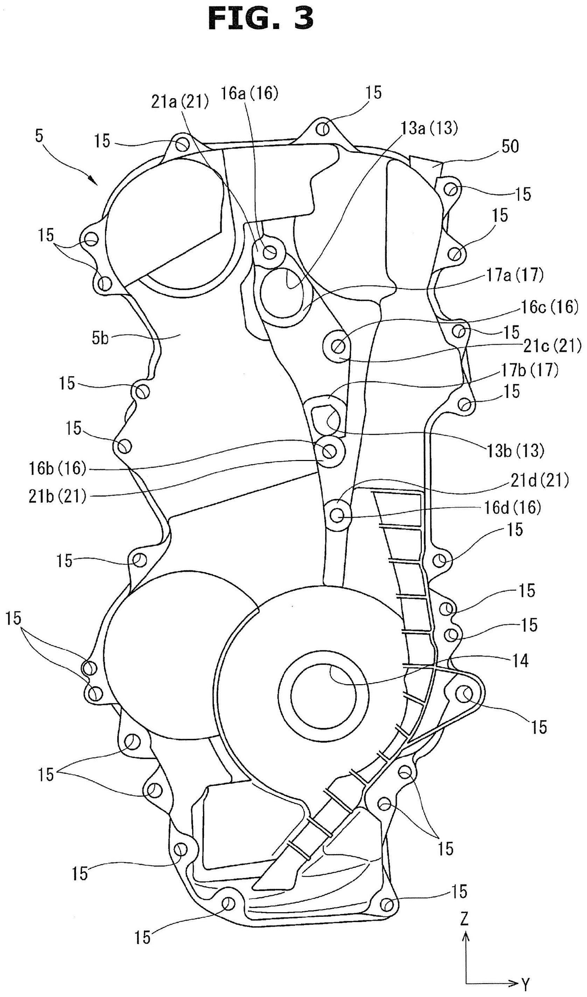

[0020. As illustrated in Figs. 3 and 4, boss portion through holes 13, a crankshaft through hole 14, first bolt through holes 15, second bolt through holes 16, and a gauge insertion port 50 are formed on the front cover 5. Fig. 3 is a front view of the front cover 5. Fig. 4 is a front view of the internal combustion engine 1 to which the internal combustion engine-side mounting bracket 6 is attached.

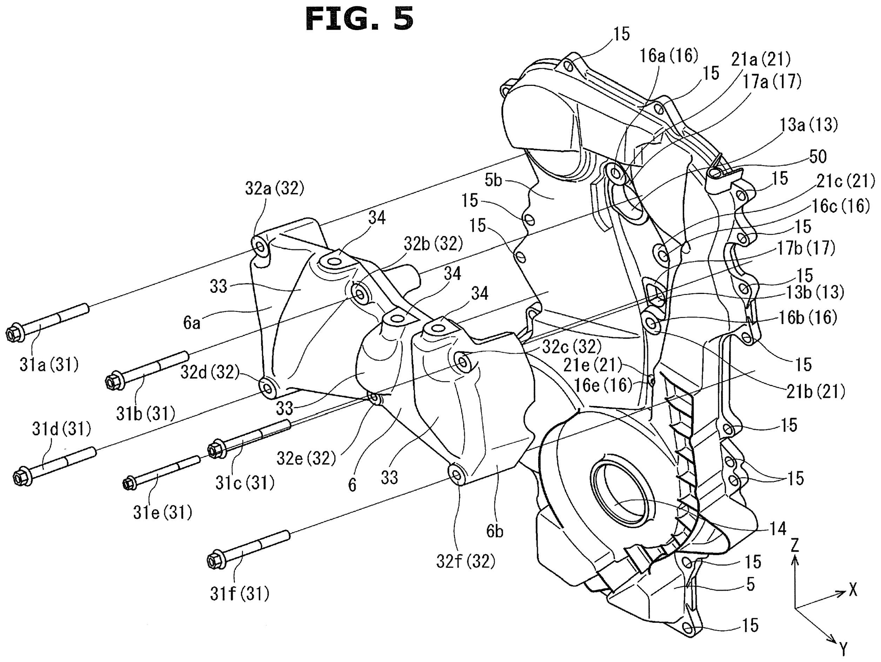

[0021. The boss portion through holes 13 are holes which bolt boss portions 32 (see Fig. 5) of the internal combustion engine-side mounting bracket 6 penetrate. The boss portion through holes 13 are formed at two positions located at a middle portion, in the width direction of the internal combustion engine body 8, of the front cover 5. An outer peripheral edge of each of the boss portion through hole 13 is an annular (a tubular) through hole peripheral edge portion (an annular (a tubular) bolt through hole peripheral edge portion) 17. The through hole peripheral edge portions 17 are pressed against the end surface, located at one end side in the cylinder line direction, of the internal combustion engine body 8 and are in contact with this end surface of the internal combustion engine body 8 on a back surface side of the front cover 5. The middle portion of the front cover 5 is then supported on the internal combustion engine body 8. Gaps between the through hole peripheral edge portions 17 and the internal combustion engine body 8 are liquid-tightly sealed by a sealing member (hot shown). Furthermore, gaps between peripheries of the second bolt through holes 16 and the internal combustion engine body 8 are also liquid-tightly sealed by a sealing member (hot shown).

[0022. Fig. 5 is an exploded perspective view of the front cover 5 and the internal combustion engine-side mounting bracket 6, which are attached to the internal combustion engine body 8.

[0023. As illustrated in Fig. 5, a boss portion through hole 13a is a through hole which a second bolt boss portion 32b penetrates. A through hole peripheral edge portion 17a is formed at a periphery of the boss portion through hole 13a. The through hole peripheral edge portion 17a is pressed against the cylinder head 2 on the back surface side of the front cover 5.

[0024. A boss portion through hole 13b is a through hole which is located at a lower side of the boss portion through hole 13a, and which a fifth bolt boss portion 32e penetrates as shown in Fig. 5. A through hole peripheral edge portion 17b is formed at a periphery of the boss portion through hole 13b. The through hole peripheral edge portion 17b is pressed against the cylinder block 3 on the back surface side of the front cover 5.

[0025. The crankshaft through hole 14 is a through hole which the crankshaft 19 penetrates. The crankshaft through hole 14 is formed at a lower side with respect to the boss portion through holes 13. A periphery of the crankshaft through hole 14 is liquid-tightly sealed.

[0026. The first bolt through holes 15 are through holes which bolts (not shown) for fixing the front cover 5 to the internal combustion engine body 8 penetrate. The plurality of (a number of) first bolt through holes 15 are formed at an outer peripheral edge of the front cover 5. The outer peripheral edge of the front cover 5 is liquid-tightly sealed throughout its entire circumference by an annular outer peripheral edge sealing member (not shown). The outer peripheral edge sealing member is disposed on an inner peripheral side with respect to the first bolt through holes 15.

[0027. The second bolt through holes 16 are through holes which fixing bolts (not shown) for fixing the front cover 5 to the internal combustion engine body 8 penetrate. The second bolt through holes 16 are formed at the front cover boss portions 21. The front cover boss portions 21 are fixed to the end surface, located at one end side in the cylinder line direction, of the internal combustion engine body 8 on the back surface side of the front cover 5 with top end surfaces of the front cover boss portions 21 being pressed against the end surface of the internal combustion engine body 8.

[0028. A front cover boss portion 21a is fixed to the cylinder head 2 on the back surface side of the front cover 5 with a top end surface of the front cover boss portion 21a being pressed against the cylinder head 2. Front cover boss portions 21b, 21c and 21d are fixed to the cylinder block 3 on the back surface side of the front cover 5 with top end surfaces of the front cover boss portion 21b, 21c and 21d being pressed against the cylinder block 3.

[0029. The front cover boss portion 21a is formed so as to adjacently continue to the through hole peripheral edge portion 17a. A second bolt through hole 16a is formed at the front cover boss portion 21a.

[0030. The front cover boss portion 21b is formed so as to adjacently continue to the through hole peripheral edge portion 17b. A second bolt through hole 16b is formed at the front cover boss portion 21b.

[0031. The front cover boss portion 21c is formed so as to be located between the through hole peripheral edge portion 17a and the through hole peripheral edge portion 17b in the vertical direction (the direction along the Z-axis) of the front cover 5. In other words, the front cover boss portion 21c is formed at a portion, which is covered by the internal combustion engine-side mounting bracket 6, on the front cover 5. A second bolt through hole 16c is formed at the front cover boss portion 21c.

[0032. The front cover boss portion 21d is formed so as to be located at a lower side of the through hole peripheral edge portion 17b in the vertical direction (the direction along the Z-axis) of the front cover 5. In other words, the front cover boss portion 21d is formed at a portion, which is not covered by the internal combustion engine-side mounting bracket 6, on the front cover 5. A second bolt through hole 16d is formed at the front cover boss portion 21d.

[0033. The gauge insertion port 50 is a hole that is formed through an upper portion of the front cover 5 into which an oil level gauge (not shown) is inserted.

[0034. The internal combustion engine-side mounting bracket 6 is secured to the end surface, located at one end side in the cylinder line direction, of the internal combustion engine body 8 without coming into contact with the front cover 5. The internal combustion engine-side mounting bracket 6 is a casting made of a metal material such as aluminum alloy. The internal combustion engine-side mounting bracket 6 is a member for connecting the internal combustion engine body 8 (the internal combustion engine 1) to the vehicle body.

[0035. As illustrated in Fig. 5, the internal combustion engine-side mounting bracket 6 is secured to the end surfaces, located at one end sides, of the cylinder block 3 and the cylinder head 2 with six bolts 31 of first to sixth bolts 31a to 31f. The bolts 31 penetrate the bolt boss portions 32 of the internal combustion engine-side mounting bracket 6.

[0036. The internal combustion engine-side mounting bracket 6 is formed so that its length along the width direction of the internal combustion engine body 8 is longer than that of the front cover 5. As illustrated in Figs. 2 and 4, the internal combustion engine-side mounting bracket 6 overlaps the front cover 5 in the cylinder line direction of the internal combustion engine body 8 so as to cover a part of an outer surface of the front cover 5 with a predetermined gap provided between the internal combustion engine-side mounting bracket 6 and the front cover 5, and is connected to the internal combustion engine body 8. That is, the internal combustion engine-side mounting bracket 6 is connected to the internal combustion engine body 8 so as not to come into contact with the front cover 5. The internal combustion engine-side mounting bracket 6 is formed so that its length along the width direction of the internal combustion engine body 8 is longer than a length, along the width direction of the internal combustion engine body 8, of at least the overlapping portion of the front cover 5 with the internal combustion engine-side mounting bracket 6.

[0037. As shown in Figs. 2, 4 and 5, the internal combustion engine-side mounting bracket 6 is fixed to the internal combustion engine body 8 on both sides of the front cover 5 with the internal combustion engine-side mounting bracket 6 straddling an outside of the front cover 5 in the width direction (the direction along the Y-axis) of the front cover 5.

[0038. The internal combustion engine-side mounting bracket 6 is secured to the internal combustion engine body 8 at an upper edge portion, in the up-down direction along the cylinder axis L1 of the internal combustion engine 1, of the internal combustion engine-side mounting bracket 6 with the first to third bolts 31a to 31c. The internal combustion engine-side mounting bracket 6 is secured to the internal combustion engine body 8 at a lower edge portion, in the up-down direction along the cylinder axis L1 of the internal combustion engine 1, of the internal combustion engine-side mounting bracket 6 with the fourth to sixth bolts 31d to 31f.

[0039. More specifically, both end portions, in the width direction of the internal combustion engine body 8, of the upper edge portion of the internal combustion engine-side mounting bracket 6 are fixed to the internal combustion engine body 8 on both outer sides of the front cover 5 with the first and third bolts 31a and 31c. Furthermore, a middle portion, in the width direction of the internal combustion engine body 8, of the upper edge portion of the internal combustion engine-side mounting bracket 6 is fixed to the internal combustion engine body 8 with the second bolt 31b that penetrates the front cover 5.

[0040. Both end portions, in the width direction of the internal combustion engine body 8, of the lower edge portion of the internal combustion engine-side mounting bracket 6 are fixed to the internal combustion engine body 8 on both outer sides of the front cover 5 with the fourth and sixth bolts 31d and 31f. Furthermore, a middle portion, in the width direction of the internal combustion engine body 8, of the lower edge portion of the internal combustion engine-side mounting bracket 6 is fixed to the internal combustion engine body 8 with the fifth bolt 31e that penetrates the front cover 5.

[0041. As illustrated in Fig. 5, the internal combustion engine-side mounting bracket 6 has the six bolt boss portions 32 of a first bolt boss portion 32a to a sixth bolt boss portion 32f. The internal combustion engine-side mounting bracket 6 does not come into contact with the front cover 5, and these six bolt boss portions 32 do not come into contact with the front cover 5.

[0042. The first bolt 31a fixes an upper portion, located at one end side in the internal combustion engine width direction, of the internal combustion engine-side mounting bracket 6 to the cylinder head 2 outside the front cover 5. The first bolt 31a penetrates the first bolt boss portion 32a of the internal combustion engine-side mounting bracket 6. The first bolt boss portion 32a is formed at one end side, in the width direction of the internal combustion engine body 8, of the internal combustion engine-side mounting bracket 6.

[0043. The second bolt 31b penetrates the front cover 5, and fixes an upper portion, located at the substantially middle in the internal combustion engine width direction, of the internal combustion engine-side mounting bracket 6 to the cylinder head 2. The second bolt 31b penetrates the second bolt boss portion 32b of the internal combustion engine-side mounting bracket 6. The second bolt boss portion 32b is formed at a middle portion, in the width direction of the internal combustion engine body 8, of the internal combustion engine-side mounting bracket 6.

[0044. The second bolt boss portion 32b penetrates the boss portion through hole 13a of the front cover 5 so that an outer peripheral surface of the second bolt boss portion 32b does not come into contact with an inner peripheral surface of the boss portion through hole 13a. A top end portion, on the back surface side of the front cover 5, of the second bolt boss portion 32b is pressed against the cylinder head 2. The front cover boss portion 21a adjacent to the boss portion through hole 13a is fixed to the cylinder head 2 with a fixing bolt (not shown).

[0045. The thirdbolt 31c fixes an upper portion, located at the other end side in the internal combustion engine width direction, of the internal combustion engine-side mounting bracket 6 to the cylinder head 2 outside the front cover 5. The third bolt 31c penetrates the third bolt boss portion 32c of the internal combustion engine-side mounting bracket 6. The third bolt boss portion 32c is formed at the other end side, in the width direction of the internal combustion engine body 8, of the internal combustion engine-side mounting bracket 6.

[0046. The fourth bolt 31d fixes a lower portion, located at the one end side in the internal combustion engine width direction, of the internal combustion engine-side mounting bracket 6 to the cylinder block 3 outside the front cover 5. The fourth bolt 31d penetrates the fourth bolt boss portion 32d of the internal combustion engine-side mounting bracket 6. The fourth bolt boss portion 32d is formed at one end side, in the width direction of the internal combustion engine body 8, of the internal combustion engine-side mounting bracket 6.

[0047. The fifth bolt 31e penetrates the front cover 5, and fixes a lower portion, located at the substantially middle in the internal combustion engine width direction, of the internal combustion engine-side mounting bracket 6 to the cylinder block 3. The fifth bolt 31e penetrates the fifth bolt boss portion 32e of the internal combustion engine-side mounting bracket 6. The fifth bolt boss portion 32e is formed at a middle portion, in the width direction of the internal combustion engine body 8, of the internal combustion engine-side mounting bracket 6.

[0048. The fifth bolt boss portion 32e penetrates the boss portion through hole 13b of the front cover 5 so that an outer peripheral surface of the fifth bolt boss portion 32e does not come into contact with an inner peripheral surface of the boss portion through hole 13b. A top end portion, on the back surface side of the front cover 5, of the fifth bolt boss portion 32e is pressed against the cylinder block 3. The front cover boss portion 21b adjacent to the boss portion through hole 13b is fixed to the cylinder block 3 with a fixing bolt (not shown).

[0049. The sixth bolt 31f fixes a lower portion, located at the other end side in the internal combustion engine width direction, of the internal combustion engine-side mounting bracket 6 to the cylinder block 3 outside the front cover 5. The sixth bolt 31f penetrates the sixth bolt boss portion 32f of the internal combustion engine-side mounting bracket 6. The sixth bolt boss portion 32f is formed at the other end side, in the width direction of the internal combustion engine body 8, of the internal combustion engine-side mounting bracket 6.

[0050. As illustrated in Figs. 4 and 5, the internal combustion engine-side mounting bracket 6 has a plurality of (three) mounting portions 33.

[0051. The mounting portions 33 are portions for mounting the internal combustion engine 1 to the vehicle body, and their upper end surfaces 34 are fixed to the vehicle body-side mounting bracket 7 with bolts (not shown). Each mounting portion 33 is formed by a bulging portion having a semi-cylindrical tubular cross section that protrudes forward with respect to the one end side surface 8a of the internal combustion engine body 8. That is, the back side of the mounting portion 33 is hollowed out. The mounting portion 33 is formed so as to extend in the up-down direction (the vertical direction) along the cylinder axis L1 of the internal combustion engine 1. That is, the mounting portion 33 has a long thin shape (or an elongated shape) extending in the up-down direction (the vertical direction), and its upper end surface 34 is fixed to the vehicle body-side mounting bracket 7.

[0052. In the internal combustion engine 1 of the embodiment described above, one end portion 6a and the other end portion 6b, which are both side portions of the internal combustion engine-side mounting bracket 6 in the width direction (the direction along the Y-axis) of the internal combustion engine body 8, are each individually fixed to both of the cylinder head 2 and the cylinder block 3 with the bolts 31, which are fastening elements.

[0053. That is, an upper portion of the one end portion 6a (the one end side) of the internal combustion engine-side mounting bracket 6, which is a left side in the right-left direction along the width direction (the direction along the Y-axis) of the internal combustion engine body 8 in Fig. 4, is fixed to the cylinder head 2 with the first bolt 31a. Also, a lower portion of the one end portion 6a (the one end side) of the internal combustion engine-side mounting bracket 6, which is the left side in the right-left direction along the width direction (the direction along the Y-axis) of the internal combustion engine body 8 in Fig. 4, is fixed to the cylinder block 3 with the fourth bolt 31d.

[0054. An upper portion of the other end portion 6b (the other end side) of the internal combustion engine-side mounting bracket 6, which is a right side in the right-left direction along the width direction (the direction along the Y-axis) of the internal combustion engine body 8 in Fig. 4, is fixed to the cylinder head 2 with the third bolt 31c. Also, a lower portion of the other end portion 6b (the other end side) of the internal combustion engine-side mounting bracket 6, which is the right side in the right-left direction along the width direction (the direction along the Y-axis) of the internal combustion engine body 8 in Fig. 4, is fixed to the cylinder block 3 with the sixth bolt 31f.

[0055. The front cover 5 is attached to the end surface, located at one end side in the cylinder line direction, of the internal combustion engine body 8, thereby ensuring the rigidity of the one end side of the internal combustion engine body 8. For instance, at the front end of the internal combustion engine, even if the force transmitted to the internal combustion engine body by the rotational power transmission mechanism deforms the front end side of the internal combustion engine body, or acts in a direction that weakens the fastening force between the cylinder block and the cylinder head (promotes misalignment or opening-up (loosening) between the fastening members), if the front cover fixed to the cylinder block and the cylinder head is made of metal, the front cover acts as reinforcement, and suppresses the deformation and the reduction in the fastening force (the misalignment or the opening-up (the loosening) between the fastening members), thereby contributing to improvement in the rigidity of the internal combustion engine body.

[0056. In the internal combustion engine 1, if the front cover is made of resin, the rigidity of the one end side in the cylinder line direction of the internal combustion engine body 8 is lower than that when the material of the front cover 5 is metal.

[0057. However, in the internal combustion engine 1 described above, since both side portions of the internal combustion engine-side mounting bracket 6 disposed so as to straddle the front cover 5 are each fixed to the cylinder head 2 and the cylinder block 3, it is possible to suppress a decrease in the rigidity of the one end side in the cylinder line direction of the internal combustion engine body 8, which is a concern caused by change of the material of the front cover 5 from the metal to the resin.

[0058. That is, in the internal combustion engine 1, since both side portions (the one end portion 6a and the other end portion 6b) of the internal combustion engine-side mounting bracket 6 are each fixed to both of the cylinder head 2 and the cylinder block 3 at different securing points, it is possible to ensure the rigidity of the one end side in the cylinder line direction of the internal combustion engine body 8.

[0059. Furthermore, in the internal combustion engine 1, the internal combustion engine-side mounting bracket 6 is disposed so as to straddle the front cover 5, and the internal combustion engine-side mounting bracket 6 is unlikely to interfere with the front cover 5, thereby improving the degree of freedom in design of the front cover 5.

[0060. In addition, the internal combustion engine-side mounting bracket 6 is formed so that its length along the width direction of the internal combustion engine body 8 is set to the length that can straddle the front cover 5. Therefore, the length (the width), along the width direction of the internal combustion engine body 8, of the internal combustion engine-side mounting bracket 6 can be set to be long. This has the advantage in ensuring the rigidity of the one end side in the cylinder line direction of the internal combustion engine body 8.

[0061. In the internal combustion engine 1, since the one end portion 6a and the other end portion 6b, which are both side portions of the internal combustion engine-side mounting bracket 6 in the width direction of the internal combustion engine body 8, are fixed to the cylinder head 2 and the cylinder block 3 at the individual securing points, it is possible to suppress an occurrence of vibration of opening-up (loosening) between the cylinder head 2 and the cylinder block 3 at the one end side in the cylinder line direction.

[0062. Furthermore, in the internal combustion engine 1, even though the front cover 5 is made of resin which is lower in the rigidity than metal, since the internal combustion engine-side mounting bracket 6 is made of metal which has high rigidity, it is possible to lower the amplitude of vibration transmitted from the internal combustion engine body side to the internal combustion engine-side mounting bracket 6.

[0063. The internal combustion engine-side mounting bracket 6 is a belt-shaped member that extends continuously along the width direction of the internal combustion engine body 8, and when viewed from the front side of the internal combustion engine, a size (width or length), in the width direction of the internal combustion engine body 8, of the internal combustion engine-side mounting bracket 6 extending in the belt shape is longer than a size (height or length), in a height direction of the internal combustion engine body 8, of the internal combustion engine-side mounting bracket 6. Furthermore, the internal combustion engine-side mounting bracket 6 overlaps the front cover 5 so as to cover a part of the outer surface of the front cover 5, and a plurality of portions at an outer peripheral edge of the internal combustion engine-side mounting bracket 6 are fixed to the internal combustion engine body 8.

[0064. With this, in the internal combustion engine 1, since the outer surface of the front cover 5 is covered with the internal combustion engine-side mounting bracket 6 in the belt shape, noise emitted from the surface of the front cover 5 is blocked by the internal combustion engine-side mounting bracket 6. Therefore, radiation noise from the front cover 5, which contributes greatly to engine radiation noise, can be reduced.

[0065. In the internal combustion engine 1, both side portions, in the width direction of the internal combustion engine body 8, of the internal combustion engine-side mounting bracket 6 are fixed to an outer periphery (an outer peripheral edge) of the end surface located at one end side of the internal combustion engine body 8.

[0066. Therefore, in the internal combustion engine 1, the length, along the width direction of the internal combustion engine body 8, of the internal combustion engine-side mounting bracket 6 can be set to the maximum possible length. It is thus possible to effectively resist various forces and twists on one end side of the internal combustion engine body 8.

[0067. In the internal combustion engine 1, the gap between the front cover 5 and the internal combustion engine body 8 is lubricated with lubricating oil.

[0068. In the internal combustion engine 1, since the internal combustion engine-side mounting bracket 6 is connected to the internal combustion engine body 8 with the internal combustion engine-side mounting bracket 6 straddling the front cover 5, the liquid-tight space 9 can be easily formed between the front cover 5 and the internal combustion engine body 8, and the deformation mode of the cylinder head 2 and the cylinder block 3 can be suppressed, thereby improving the sealing performance of the liquid-tight space 9 between the front cover 5 and the internal combustion engine body 8.

[0069. Although the specific embodiments of the present invention have been described, the present invention is not limited to the above embodiments, and can be realized in various configurations without departing from the scope of the present invention.

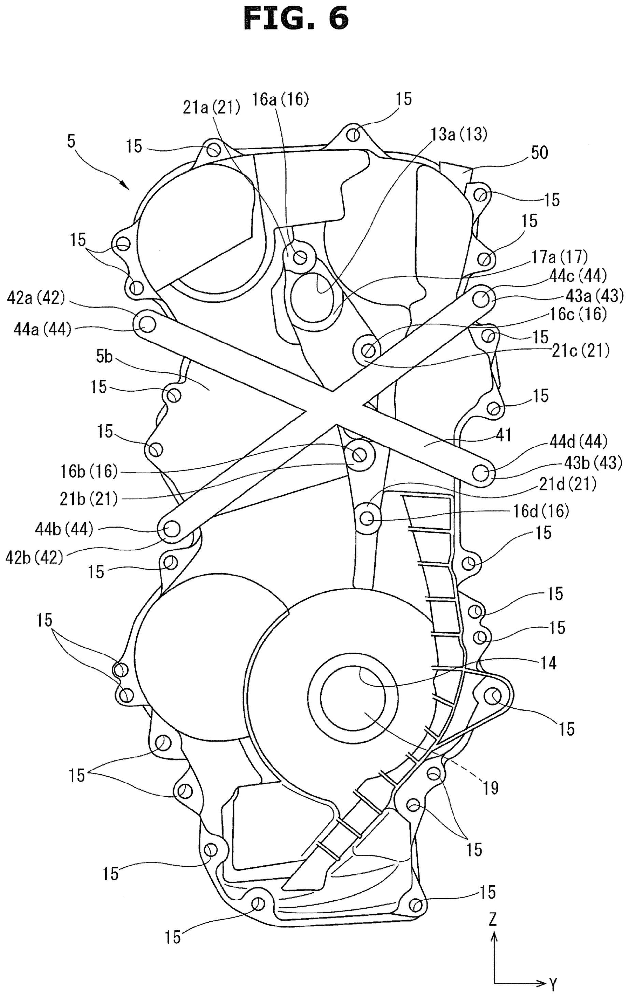

[0070. For instance, the internal combustion engine 1 may employ an internal combustion engine-side mounting bracket 41 made of resin and having a substantially X-shape as shown in Fig. 6. Similar to the internal combustion engine-side mounting bracket 6 described above, this internal combustion engine-side mounting bracket 41 is disposed so as to straddle the front cover 5, and one end portion 42 and the other end portion 43, which are both side portions of the internal combustion engine-side mounting bracket 41 in the width direction (the direction along the Y-axis) of the internal combustion engine body 8, are individually fixed to both of the cylinder head 2 and the cylinder block 3 with the bolts 44, which are fastening elements.

[0071. More specifically, one upper end portion 42a is fixed to the cylinder head 2 with a bolt 44a. One lower end portion 42b is fixed to the cylinder block 3 with a bolt 44b. The other upper end portion 43a is fixed to the cylinder head 2 with a bolt 44c. The other lower end portion 43b is fixed to the cylinder block 3 with a bolt 44d. The internal combustion engine-side mounting bracket 41 shown in Fig. 6 is fixed to the internal combustion engine body 8 with the four bolts 44.

[0072. Since the internal combustion engine-side mounting bracket 41 shown in Fig. 6 has an X-shape, the outer surface of the front cover 5 is not covered continuously in the belt shape. However, since both side portions, in the width direction (the direction along the Y-axis) of the internal combustion engine body 8, of the internal combustion engine-side mounting bracket 41 are each fixed to both of the cylinder head 2 and the cylinder block 3 at different securing points with the bolts 44, it is possible to ensure the rigidity of the one end side in the cylinder line direction of the internal combustion engine body 8.

## Claims

1. An internal combustion engine comprising:
a resin front cover covering an end surface, located at one end side in a cylinder line direction, of an internal combustion engine body having a cylinder head and a cylinder block; and
a metal mounting bracket located at the one end side in the cylinder line direction of the internal combustion engine body, disposed so as to straddle an outside of the front cover, and connecting the internal combustion engine body to a vehicle body,
wherein both side portions, in a width direction of the internal combustion engine body, of the mounting bracket are each fixed to both of the cylinder head and the cylinder block.

2. The internal combustion engine as claimed in claim 1, wherein
the mounting bracket is a belt-shaped member that extends continuously along the width direction of the internal combustion engine body,
the mounting bracket overlaps the front cover so as to cover a part of an outer surface of the front cover, and
a plurality of portions at an outer peripheral edge of the mounting bracket are fixed to the internal combustion engine body.

3. The internal combustion engine as claimed in claim 1 or 2, wherein
both side portions, in the width direction of the internal combustion engine body, of the mounting bracket are fixed to an outer periphery of the end surface located at the one end side of the internal combustion engine body.

4. The internal combustion engine as claimed in claim 1, wherein
a gap between the front cover and internal combustion engine body is lubricated with lubricating oil.
